Europäisches Patentamt

European Patent Office

Office européen des brevets

(19)

(11) Veröffentlichungsnummer: **0 056 652**
**A1**

## EUROPÄISCHE PATENTANMELDUNG

(21) Anmeldenummer: **82100364.7**

(22) Anmeldetag: **20.01.82**

(51) Int. Cl.³: **A 47 J 37/07**

(30) Priorität: **21.01.81 TR 4885/81**

(43) Veröffentlichungstag der Anmeldung:
**28.07.82 Patentblatt 82/30**

(84) Benannte Vertragsstaaten:
**DE FR GB IT**

(71) Anmelder: **Akdag, Yusuf Sezai, Dipl.-Volkswirt**
**Mainstrasse 119**
**D-6050 Offenbach/Main(DE)**

(72) Erfinder: **Vatansever, Seyit**
**Zeytinlik Mah Pancar Sok No. 1/A**
**Istanbul-Bakirköy(TR)**

(74) Vertreter: **Beyer, Werner, Dipl.Ing. et al,**
**Patentanwälte Dipl.-Ing. W. Beyer Dipl.-Wirtsch.-Ing. B.**
**Jochem Staufenstrasse 36 Postfach 174109**
**D-6000 Frankfurt / Main(DE)**

(54) Grillgerät.

(57) Das Grillgerät besteht aus einem schalenförmigen, auf Füßen ruhenden Behälter, auf den ein Grillrost (28) aufsetzbar ist. Als Brennmaterial dienen jeweils einige Blätter normales Zeitungspapier, das lose zusammengeknüllt und im wesentlichen abgebrannt wird, bevor der Grillrost mit dem Grillgut aufgesetzt wird. Wegen des Betriebs mit Zeitungspapier ist der Behälter (10) verhältnismäßig hoch, vorzugsweise 290 mm. Sein Durchmesser kann z.B. oben 260 und unten 198 mm betragen. Um eine kleinere Verpackungseinheit zu erhalten, kann der Behälter aus mehreren Teilen (16, 22, 24) bestehen, die sich zum Versand ineinander und zum Gebrauch aufeinander setzen lassen. Ein Ring von Löchern (14) in der Umfangswand des Behälters etwa in Höhe der aus dem Papier züngelnden Flammen sowie weitere Löcher im Boden des Behälters sorgen für die erforderliche Luftzirkulation. Das Grillgut wird durch die im Behälter erzeugte Heißluft gegart.

Fig. 7

Croydon Printing Company Ltd.

## G R I L L G E R Ä T

Die Erfindung betrifft ein Grillgerät, bestehend aus einem mit Löchern versehenen, schalenförmigen, auf Füßen ruhenden Behälter zur Aufnahme des Brennmaterials und einem darauf aufsetzbaren Grillrost.

Die gebräuchlichen Grillgeräte sind für den Betrieb mit Holzkohle bestimmt. Der Erfindung liegt demgegenüber die Aufgabe zugrunde, ein Grillgerät zu schaffen, welches im Betrieb billiger und in der Handhabung einfacher ist als die bekannten Geräte.

Zur Lösung der genannten Aufgabe wird vorgeschlagen, daß zum Betrieb mit Zeitungspapier als Brennmaterial der Behälter des Grillgeräts innen eine Höhe von etwa 240 bis 340 mm und einen Durchmesser von ungefähr 180 bis 300 mm hat, wobei in einer Höhe von ca. 60 bis 100 mm über dem Boden des Behälters ein Ring von etwa 10 bis 25 Löchern in der Umfangswand und weitere ca. 10 bis 25 Löcher im Boden mit jeweils etwa 4 bis 8 mm Durchmesser angeordnet sind.

Das vorgeschlagene Grillgerät wird vorzugsweise so benutzt, daß ca. 3 bis 5 Blatt normales Zeitungspapier einzeln locker zusammengeknüllt und auf dem Boden des Gefäßes liegend verbrannt werden und dann gegen Ende des Brennvorgangs der Grillrost mit dem Grillgut aufgelegt wird, wonach aus dem Grillgut in die Glut tropfendes Fett das Feuer verlängert.

Bei Versuchen mit Grillgeräten der vorgeschlagenen Art wurden sehr gute Ergebnisse erzielt, wenn die Höhe innen etwa 280 bis 300 mm, vorzugsweise 290 mm, der Durchmesser des konischen Behälters oben ca. 250 bis 270 mm, vorzugsweise 260 mm, und unten ca. 190 bis 210 mm, vorzugsweise 198 mm, die Höhe des Rings von Löchern über dem Boden ca. 70 bis 90 mm, vorzugsweise 82,5 mm, die Zahl der gleichmäßig über den Umfang ver-

AK 9135 / 18.1.1982

teilten Löcher in der Wand 16 bis 20, vorzugsweise 18, die Zahl der Löcher im Boden 12 bis 18, vorzugsweise 15, und der Durchmesser der Löcher 4 bis 7 mm, vorzugsweise 5 bis 6 mm, beträgt.

Es hat auf das Grillen keinen Einfluß, ob das Grillgerät mit den vorstehend angegebenen Maßen einteilig ausgebildet oder aus mehreren Teilen zusammengesetzt ist. Letztere Alternative bietet jedoch Vorteile hinsichtlich der Verpackung. Aus diesem Grunde ist der Behälter vorzugsweise in der Höhe ein- oder mehrmals geteilt, und es ist vorgesehen, daß jeweils an den Stoßstellen durch stufenförmig verengte Ausbildung des unteren Rands des jeweils oberen Teils ein Eingriffssitz mit einer Überlappung von etwa 1 bis 3 cm gebildet ist. In der bevorzugten praktischen Ausführung ist der Behälter konisch und besteht aus drei ineinander stapelbaren Teilen, wobei der Bodenteil ohne Füße eine Höhe von ca. 60 bis 80 mm hat und der mittlere Teil und oberste Teil jeweils eine Höhe von ca. 125 bis 135 haben, und wobei der Bodenteil in den mittleren Teil und dieser in den obersten Teil einsenkbar sind.

Die Füße sind zweckmäßigerweise fest am Bodenteil angebracht und können z.B. eine Höhe von 25 mm haben.

Als Material für den Behälter kommen z.B. Stahlblech, Glas, Porzellan, Aluminium und Keramik in Frage. In der bevorzugten praktischen Ausführung besteht der Bodenteil aus emailliertem Stahlblech von 0,4 bis 0,7 mm Stärke, während die beiden oberen Teile aus eloxiertem Aluminiumblech von etwa 1,0 bis 1,3 mm Stärke bestehen.

Die Anordnung der Löcher im Boden gestattet zahlreiche unterschiedliche Varianten. In der praktisch realisierten Ausführung sind die Löcher im Boden in drei Reihen angeordnet, die jeweils von dessen Miitelpunkt ausgehen, sich radial nach einer Seite erstrecken und mit den anderen Lochreihen jeweils einen Winkel von 120 Grad bilden.

Um das Wenden des Grillguts zu erleichtern, besteht der Grillrost zweckmäßigerweise aus zwei gelenkig verbundenen, mit festem oder einstellbarem Zwischenabstand in Parallellage zusammenzuklappenden Gittern mit Griffteil.

Das neue Grillgerät kommt ohne herkömmliche Brennstoffe aus.
Als Brennstoff genügt Zeitungspapier. Diese Energiequelle ist
praktisch kostenlos. Das Gerät muß auch nicht gewartet werden und hat im wesentlichen eine unbegrenzte Lebensdauer. Es
läßt sich auf Fahrten leicht mitnehmen und kann praktisch an
jedem Ort, der über eine gute Be- und Entlüftung verfügt, benutzt werden. Das Entzünden des Zeitungspapiers ist erheblich einfacher als das Anzünden der Holzkohle bei den üblichen Grillgeräten.

Der Gebrauch ist sehr einfach. Nachdem das Zeitungspapier verbrannt ist, wird das Grillgut durch die entstandene heiße
Luft in sehr kurzer Zeit gar. Diese Zeitdauer beträgt ähnlich
wie bei einem Holzkohlegrill bei Fleisch etwa 4 bis 5 Minuten
und bei Fischen etwa 8 bis 9 Minuten pro Seite. Auch der Geschmack entspricht dem, der sich mit Holzkohle erzielen läßt.

Das vorgeschlagene, mit Zeitungspapier zu betreibende Grillgerät ist in der beiliegenden Zeichnung in verschiedenen Ausführungsformen dargestellt, wobei jeweils die bevorzugten Maße
angegeben sind. Es zeigen:

Fig. 1    ein einteiliges Grillgerät;

Fig. 2    ein zweiteiliges Grillgerät mit kleinem Bodenteil und großem Oberteil;

Fig. 3    noch einmal ein zweiteiliges Grillgerät, wobei in diesem Fall der Bodenteil höher ist
          als das Oberteil;

Fig. 4    ein dreiteiliges Grillgerät;

AK 9135 / 18.1.1982

Fig. 5    die drei Teile des Grillgeräts nach Fig. 4
          in größerem Maßstab;

Fig. 6    eine Draufsicht auf den Bodenteil nach
          Fig. 5;

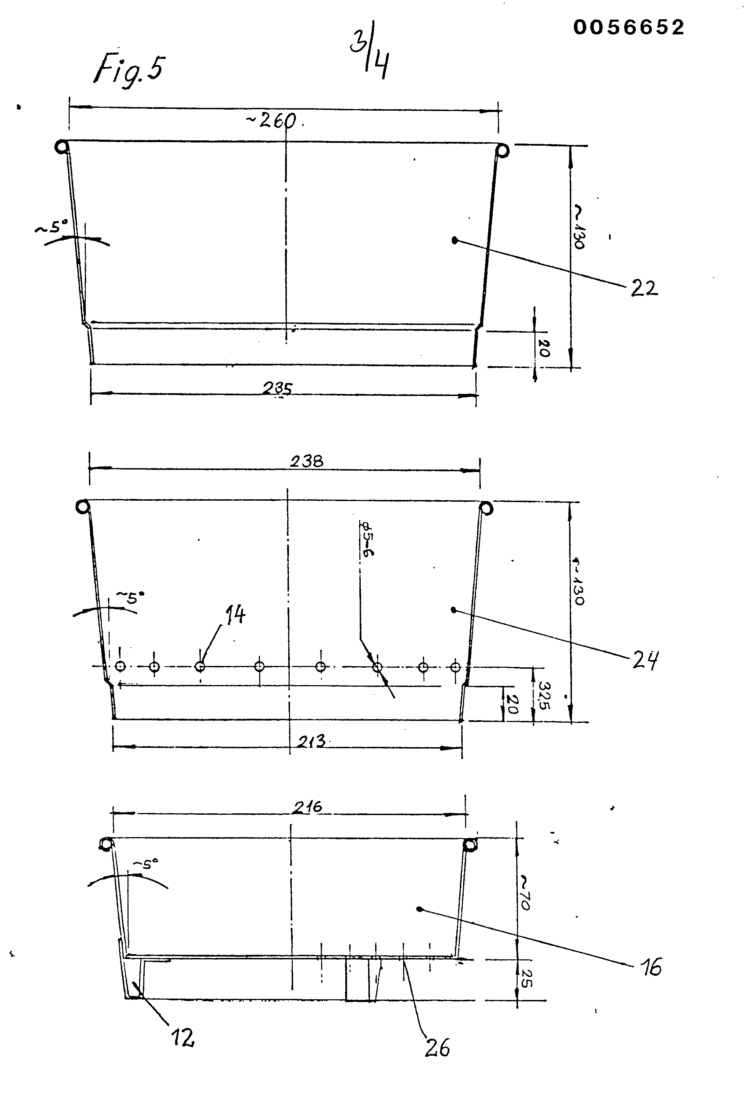

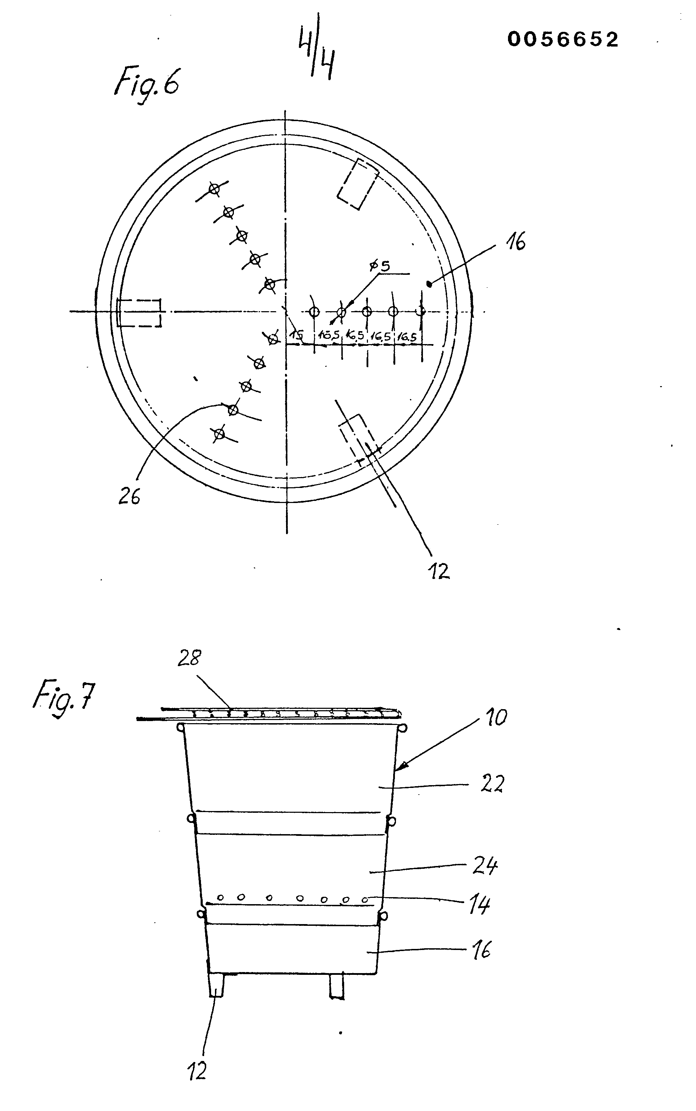

Fig. 7    das Grillgerät nach Fig. 5 im zusammengesetzten Zustand mit aufgelegtem Grillrost.

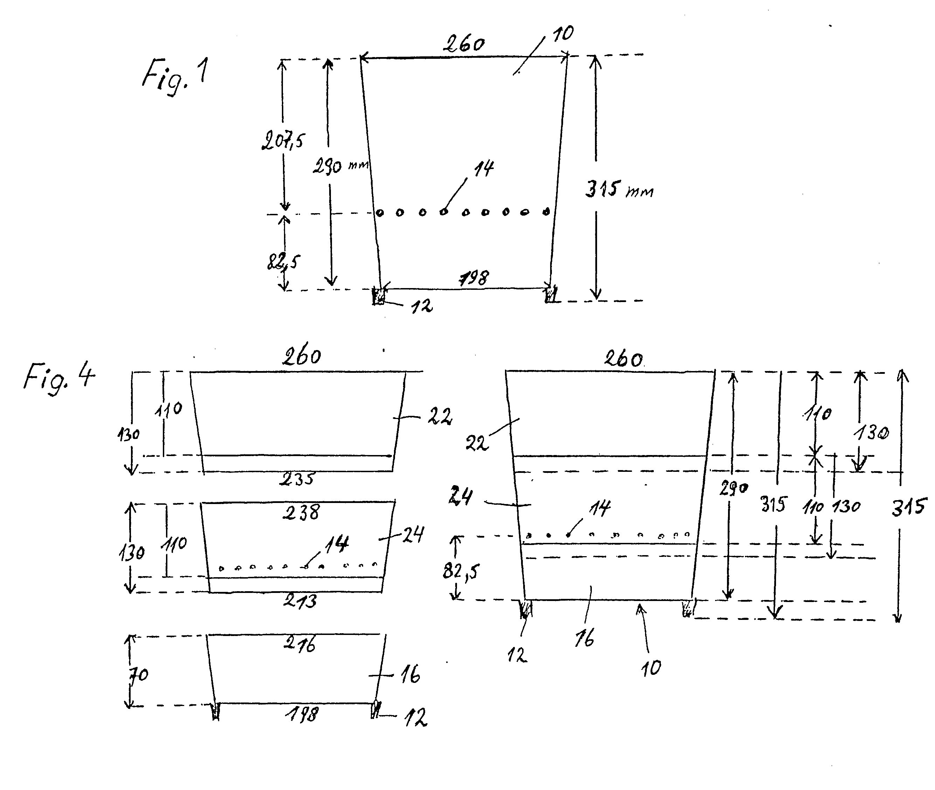

Wie sich aus dem Vergleich der in den Zeichnungsfiguren eingetragenen Maße ergibt, haben sämtliche Grillgeräte nach der
Montage dieselbe Höhe und denselben oberen und unteren Durchmesser, unabhängig davon, ob es sich um eine einteilige, zweiteilige oder dreiteilige Ausführung handelt. Wegen der Anordnung und Größe der in Fig. 1 bis 4 gezeigten Löcher in
der Umfangswand des Behälters wird auf Fig. 5 Bezug genommen.
Selbstverständlich haben auch die in Fig. 1 bis 4 dargestellten Grillgeräte Löcher im Boden, so, wie dies aus Fig. 6 hervorgeht. In allen Fällen wird gemäß Fig. 7 ein Grillrost aufgelegt.

Wegen der weitgehenden Übereinstimmung der gezeigten Grillgeräte sind in den verschiedenen Zeichnungsfiguren für entsprechende Teile dieselben Bezugszeichen verwendet worden. Im
einzelnen:

Die Ausführung nach Fig. 1 zeigt einen einteiligen Behälter 10
mit fest daran angebrachten Füßen 12. In der Umfangswand des
Behälters 10 sind in der angegebenen Höhe über dem Boden ringsum mit gleichmäßigem Abstand Löcher 14 angeordnet, die gemäß
Fig. 5 einen Durchmesser von ca. 5 bis 6 mm haben können.

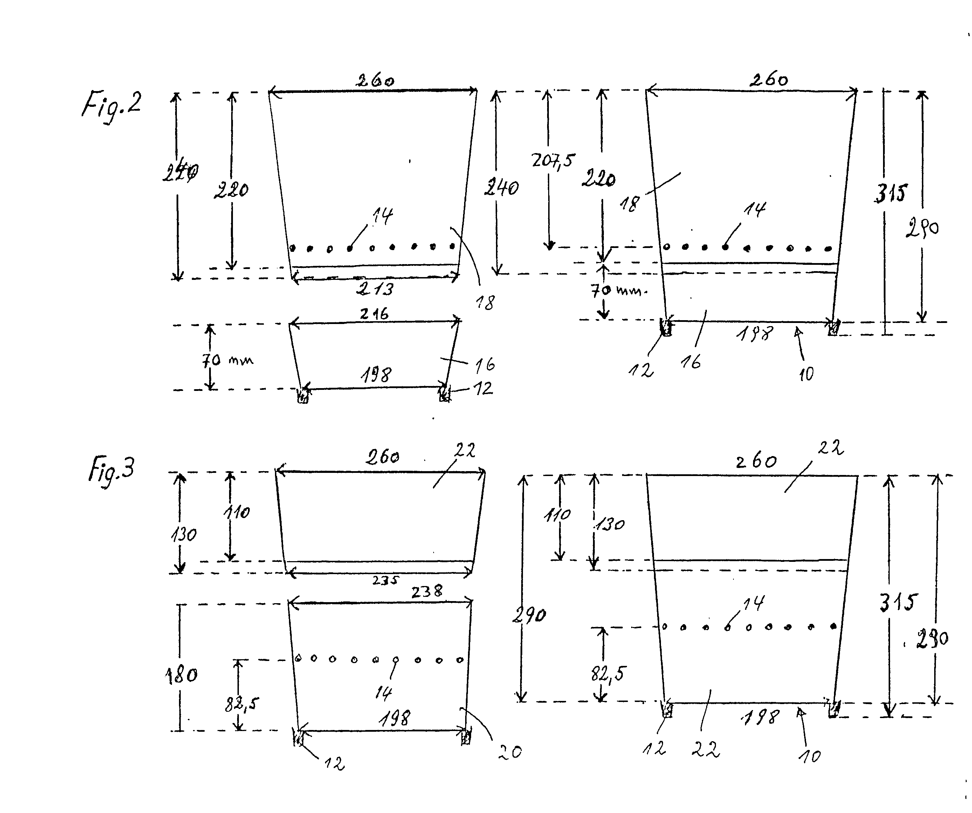

Das Grillgerät nach Fig. 2 besteht aus einem Bodenteil 16 und
einem Oberteil 18 und entspricht im zusammengesetzten Zustand,
auch hinsichtlich der Löcher 14, der Ausführung nach Fig. 1.

AK 9135 / 18.1.1982

Fig. 3 zeigt eine Ausführung, bei welcher ein verhältnismäßig hohes Unterteil 20 mit einem demgegenüber niedrigeren Oberteil 22 kombiniert ist. Im übrigen besteht Übereinstimmung mit den Ausführungen nach Fig. 1 und 2.

Gemäß Fig. 4 besteht der Behälter des Grillgeräts aus drei zusammensetzbaren Teilen, wobei der Bodenteil die Maße des Bodenteils 16 gemäß Fig. 2 und der oberste Teil die Maße des Oberteils 22 gemäß Fig. 3 hat. Der mittlere, mit 24 bezeichnete Teil hat dieselbe Höhe wie der oberste Teil 22. Dieses Grillgerät bildet im verpackten Zustand im Vergleich zu den Ausführungen nach Fig. 1 bis 3 die kleinste Einheit.

Die Darstellungen der Figuren 5 und 6 sind in größerem Maßstab als Fig. 1 bis 4 und lassen deshalb weitere Einzelheiten erkennen. Wie ersichtlich, sind die drei Teile des Behälters jeweils am oberen Rand nach außen umgebogen. Außerdem ist der untere Rand der beiden oberen Teile jeweils in einem Bereich von 20 mm stufenförmig verengt. Mit diesem verengten Bereich kann der Mitteilteil 24 in den Bodenteil 16 eingreifen. In entsprechender Weise kann der oberste Teil 22 in den Mittelteil 24 eingreifen, so daß im montierten Zustand die Teile fest ineinander sitzen.

Wie Fig. 6 zeigt, haben die mit 26 bezeichneten Löcher im Boden des Behälters einen Durchmesser von 5 mm und sind in drei vom Mittelpunkt ausgehenden Reihen sternförmig angeordnet. Es versteht sich, daß auch andere Lochanordnungen im Boden und in der Umfangswand möglich sind, sofern ihre Funktion, nämlich ausreichende Luftzirkulation ohne zu starke Durchlüftung und Abkühlung, gewährleistet ist.

Soll das Grillgerät nach Fig. 4 bis 7 in Benutzung genommen werden, so werden zunächst die drei Teile 16, 22 und 24 aufeinandergesteckt. Der in Fig. 7 mit 28 bezeichnete Grillrost wird zweckmäßigerweise vor Gebrauch etwas eingefettet. Dann werden z.B. vier Blatt normales Zeitungspapier zusammengeknüllt, in den Behälter eingelegt und angezündet.

AK 9135 / 18.1.1982

Nach ca. 15 bis 20 Sekunden, wenn das Papier nur noch glüht, kann das Grillgut auf den Grillrost gelegt werden. Durch das herabtropfende und verbrennende Fett entsteht zusätzliche Energie. Die systematisch angebrachten Löcher im mittleren Teil des Gerätes bewirken eine Zirkulation der Heißluft, wodurch die Garzeit auf ein Minimum von 4 bis 9 Minuten herabgesetzt wird.

Um das Grillgut in einfacher Weise wenden zu können, empfiehlt es sich, einen doppelten Grillrost zu benutzen, bei dem das Grillgut zwischen den beiden Gittern liegt. Diese sind, wie oben beschrieben, durch ein Gelenk verbunden, mit einem Stiel versehen und gegebenenfalls in ihrem Zwischenabstand einstellbar.

0056652

A N S P R Ü C H E

1. Grillgerät, bestehend aus einem mit Löchern versehenen, schalenförmigen, auf Füßen ruhenden Behälter zur Aufnahme des Brennmaterials und einem darauf aufsetzbaren Grillrost, d a d u r c h   g e k e n n z e i c h - n e t , daß zum Betrieb mit Zeitungspapier als Brennmaterial der Behälter (10) innen eine Höhe von etwa 240 bis 340 mm und einen Durchmesser von ungefähr 180 bis 300 mm hat, wobei in einer Höhe von etwa 60 bis 100 mm über dem Boden des Behälters ein Ring von etwa 10 bis 25 Löchern (14) in der Umfangswand und weitere ca. 10 bis 25 Löcher (26) im Boden mit jeweils etwa 4 bis 8 mm Durchmesser angeordnet sind.

2. Grillgerät nach Anspruch 1, d a d u r c h   g e - k e n n z e i c h n e t , daß die Höhe innen etwa 280 bis 300 mm, der Durchmesser des konischen Behälters (10) oben ca. 250 bis 270 mm und unten ca. 190 bis 210mm, die Höhe des Rings von Löchern (14) über dem Boden ca. 70 bis 90 mm, die Zahl der gleichmäßig über den Umfang verteilten Löcher in der Wand 16 bis 20, die Zahl der Löcher im Boden 12 bis 18 und der Durchmesser der Löcher 4 bis 7 mm beträgt.

3. Grillgerät nach Anspruch 2, d a d u r c h   g e - k e n n z e i c h n e t , daß die Höhe innen etwa 290 mm, der Durchmesser des konischen Behälters (10) oben ca. 260 mm und unten ca. 198 mm, die Höhe des Rings von Löchern (14) über dem Boden ca. 82,5 mm, die Zahl der gleichmäßig über den Umfang verteilten Löcher (14) in der Wand 18 , ihr Durchmesser 6 mm, die Zahl der Löcher im Boden  15  und ihr Durchmesser 5 mm beträgt.

AK 9135 / 18.1.1982

4. Grillgerät nach einem der Ansprüche 1 bis 3, d a - d u r c h   g e k e n n z e i c h n e t , daß die Löcher (26) im Boden in drei Reihen angeordnet sind, die jeweils von dessen Mittelpunkt ausgehen, sich radial nach einer Seite erstrecken und mit den anderen Lochreihen jeweils einen Winkel von 120 Grad bilden.

5. Grillgerät nach einem der vorhergehenden Ansprüche, d a d u r c h   g e k e n n z e i c h n e t , daß der Behälter (10) in der Höhe ein- oder mehrmals geteilt ist und jeweils an den Stoßstellen durch stufenförmig verengte Ausbildung des unteren Rands des oberen Teils ein Eingriffssitz mit einer Überlappung von etwa 10 bis 30 mm gebildet ist.

6. Grillgerät nach Anspruch 5, d a d u r c h   g e - k e n n z e i c h n e t , daß der konische Behälter aus drei ineinander stapelbaren Teilen (16,22, 24) besteht, wobei der Bodenteil (16) ohne Füße (12) eine Höhe von ca. 60 bis 80 mm hat und der mittlere Teil (24) und oberste Teil (22) jeweils eine Höhe von ca. 125 bis 135 mm haben, und wobei der Bodenteil (16) in den mittleren Teil (24) und dieser in den obersten Teil (22) einsenkbar sind.

7. Grillgerät nach Anspruch 5 oder 6, d a d u r c h   g e k e n n z e i c h n e t , daß der Bodenteil (16) aus emailliertem Stahlblech und der oder die übrigen Teile (22, 24) des Behälters aus eloxiertem Aluminiumblech bestehen.

8. Grillgerät nach einem der vorhergehenden Ansprüche, d a d u r c h   g e k e n n z e i c h n e t , daß der Grillrost (28) aus zwei gelenkig verbundenen, mit festem oder einstellbarem Zwischenabstand in Parallellage zusammenzuklappenden Gittern mit Griffstiel besteht.

0056652

9. Verfahren zum Betrieb eines Grillgeräts gemäß einem der Ansprüche 1 bis 8, d a d u r c h   g e - k e n n z e i c h n e t ,   daß ca. 3 bis 5 Blatt Zeitungspapier einzeln locker zusammengeknüllt und auf dem Boden des Behälters (10) liegend verbrannt werden, und daß gegen Ende des Brennvorgangs der Grillrost (28) mit dem Grillgut aufgelegt wird, wonach aus dem Grillgut in die Glut tropfendes Fett das Feuer verlängert.

AK 9135 / 18.1.1982

Fig. 1

Fig. 4

0056652

Fig.2

Fig.3

0056652

Fig.5

Fig.6

16

∅5

26

12

Fig.7

28

10

22

24

14

16

12

## EUROPÄISCHER RECHERCHENBERICHT

Nummer der Anmeldung

EP 82 10 0364

### EINSCHLÄGIGE DOKUMENTE

KLASSIFIKATION DER
ANMELDUNG (Int Cl ³)

| Kategorie | Kennzeichnung des Dokuments mit Angabe, soweit erforderlich, der maßgeblichen Teile | betrifft Anspruch |
|---|---|---|
| X | US - A - 3 046 969 (DAVIS) <br> * Ganzes Dokument * | 1,2,5, 6,8,9 |
| | -- | |
| A | US - A - 3 323 443 (SCHULZE) <br> * Ganzes Dokument * | 1,8,9 |
| | -- | |
| A | DE - C - 307 994 (AMBOS GmbH) <br> * Ganzes Dokument * | 1,5 |
| | -- | |
| A | US - A - 2 820 446 (FREEMAN) <br> *Spalte 2, Zeilen 21-30 * | 7 |
| | ---- | |

A 47 J 37/07

RECHERCHIERTE
SACHGEBIETE (Int Cl ³)

A 47 J

KATEGORIE DER
GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T  der Erfindung zugrunde liegende Theorien oder Grundsätze
E  älteres Patentdokument, das jedoch erst am oder nach dem Anmeldedatum veroffentlicht worden ist
D  in der Anmeldung angefuhrtes Dokument
L  aus andern Grunden angefuhrtes Dokument

& Mitglied der gleichen Patentfamilie. ubereinstimmendes Dokument

Der vorliegende Recherchenbericht wurde fur alle Patentansprüche erstellt

| Recherchenort | Abschlußdatum der Recherche | Prufer |
|---|---|---|
| Den Haag | 06-04-1982 | SCHARTZ |

EPA form 1503.1 06.78